## Europäisches Patentamt

## European Patent Office

## Office européen des brevets

(19)

(11) Veröffentlichungsnummer: **0 251 222**
**B1**

(12)

# EUROPÄISCHE PATENTSCHRIFT

(45) Veröffentlichungstag der Patentschrift:
05.12.90

(51) Int. Cl.⁵: **G03B 23/18**

(21) Anmeldenummer: **87109176.5**

(22) Anmeldetag: **26.06.87**

(54) **Überblendprojektor.**

(30) Priorität: **02.07.86 DE 3622114**

(43) Veröffentlichungstag der Anmeldung:
**07.01.88 Patentblatt 88/1**

(45) Bekanntmachung des Hinweises auf die Patenterteilung:
**05.12.90 Patentblatt 90/49**

(84) Benannte Vertragsstaaten:
**AT BE CH DE ES FR GB IT LI NL SE**

(56) Entgegenhaltungen:
**EP-A- 0 005 072**
**AT-A- 268 720**
**DE-C- 3 517 376**
**US-A- 3 194 115**

(73) Patentinhaber: **REFLECTA GMBH FOTO FILM PROJEKTION, Berlichingenstrasse 9, D-8540 Schwabach(DE)**

(72) Erfinder: **Kronbauer, Hermann, Maisstrasse 6, D-8011 Aschheim(DE)**
Erfinder: **Kupper, Hermann, Leutholdstrasse 9, D-8000 München 83(DE)**
Erfinder: **Rehm, Christian, Edeltrautstrasse 82, D-8000 München 82(DE)**

(74) Vertreter: **LOUIS, PÖHLAU, LOHRENTZ & SEGETH, Kesslerplatz 1 Postfach 3055, D-8500 Nürnberg-1(DE)**

ACTORUM AG

## Beschreibung

Die Erfindung betrifft einen Überblendprojektor mit zwei zu einem Gerät vereinigten Bildwerfern, die je ein Objektiv, eine Diabühne und ein Beleuchtungssystem aufweisen, einer Führung für ein gemeinsames Diamagazin und einer Einrichtung zum Diawechsel.

Ein derartiger Überblendprojektor ist bspw. aus der DE-PS 35 17 376 bekannt. Bei diesem Überblendprojektor erstreckt sich die Führung für das gemeinsame Diamagazin in herkömmlicher Weise parallel zu den optischen Achsen der Objektive. Die jeweils aus der Diabühne und dem Beleuchtungssystem bestehenden Projektionseinheiten sind entlang den optischen Achsen der Objektive verschiebbar, um einen Diawechsel in den jeweiligen Bildwerfern zu ermöglichen.

Der für die jeweiligen Projektionseinheiten erforderliche Verschiebeweg bedingt Totraum im Überblendprojektor, so daß dieser entsprechend groß gestaltet werden muß. Außerdem müssen bei einem Diawechsel relativ große Massen, nämlich die Masse einer aus Diabühne und Beleuchtungssystem bestehenden Projektionseinheit, bewegt werden.

Der Erfindung liegt nun die Aufgabe zugrunde, einen Überblendprojektor zu schaffen, bei dem die bei einem Diawechsel zu bewegenden Massen klein sind und der darüber hinaus sich platzsparend gestalten läßt.

Diese Aufgabe wird erfindungsgemäß dadurch gelöst, daß die Führung für das Diamagazin quer zu den optischen Achsen der zwei Bildwerfer verläuft, daß zwischen den beiden Bildwerfern ein parallel zu den optischen Achsen verschiebbarer Hauptschieber zur Entnahme eines Dias aus dem Diamagazin für eine Projektion und zur Eingabe eines Dias in das Diamagazin nach der Projektion angeordnet ist, daß in der Verschiebungsstrecke des Hauptschiebers eine Diadreheinrichtung mit einer vertikalen Drehachse vorgesehen ist zum Drehen der in die Diadreheinrichtung eingeführten Dias um 90° und daß jeder Diabühne ein Querschieber zugeordnet ist zum Wechseln eines Dias zwischen der jeweiligen Diabühne und der Diadreheinrichtung.

Bei dem erfindungsgemäßen Diaprojektor sind die Projektionseinheiten stationär, so daß der durch den Verschiebeweg der Projektionseinheiten bei dem bekannten Überblendprojektor bedingte Totraum wegfällt. Der erfindungsgemäße Überblendprojektor wird somit kleiner. Auch sind die beim erfindungsgemäßen Überblendprojektor zu bewegenden Massen klein. Es handelt sich dabei lediglich um das Dia selbst sowie um die zur Bewegung des Dias benötigten Teile. Wesentlich für die erfindungsgemäße Lösung ist, daß das gemeinsame Diamagazin in unkonventioneller Weise quer zur optischen Achse der Objektive angeordnet ist.

Zweckmäßigerweise handelt es sich beim Hauptschieber um eine verschiebbare, ein Dia ergreifende Zangeneinrichtung.

Um das Ergreifen eines Dias durch die Zangeneinrichtung im Diamagazin, wo die räumlichen Verhältnisse sehr beengt sind, zu erleichtern, ist es ferner vorteilhaft, wenn auf der zur Diadreheinrichtung entgegengesetzten Seite der Diamagazinführung ein auf der zum Hauptschieber entgegengesetzten Diaseitenkante angreifender Diaauswerfer wirksam ist zum teilweisen Ausstoß eines Dias. Das durch den Diaauswerfer teilweise ausgestoßene Dia wird dann erst durch die Zangeneinrichtung ergriffen, so daß die Öffnungs- bzw. Schließbewegung der Zange nicht durch benachbarte Dias behindert wird.

Die einfachste Konstruktion für einen Querschieber besteht darin, daß jeder Querschieber zwei starr miteinander verbundene Halteelemente aufweist zwischen die das Dia durch die Diadreheinrichtung einschwenkbar ist.

Weitere Vorteile, Einzelheiten und Merkmale der Erfindung ergeben sich aus der nachstehenden, anhand der beiliegenden Zeichnung erfolgenden Beschreibung eines schematischen Ausführungsbeispiels. In der Zeichnung stellen dar:

Fig. 1 schematisch eine Draufsicht auf einen erfindungsgemäßen Überblendprojektor,

Fig. 2 schematisch eine Seitenansicht eines Querschiebers,

Fig. 3 schematisch eine Seitenansicht einer Diadreheinrichtung,

Fig. 4 schematisch eine Endansicht der Diadreheinrichtung und

Fig. 5 eine Endansicht des die Diadreheinrichtung überlappenden Querschiebers.

Der erfindungsgemäße Überblendprojektor weist zwei Objektive 10 und 12 auf, deren optische Achsen parallel zueinander verlaufen. In den optischen Achsen ist jeweils ein Beleuchtungssystem 14,16 angeordnet, das jeweils eine Lampe 18,20 und einen Umlenkspiegel 22,24 aufweist, der das Licht der Lampe 18, 20 um 90° umlenkt, so daß es sich entlang der optischen Achse der Objektive 10,12 ausbreitet. Die Lampen 18,20 liegen dabei jeweils außen wie gezeigt. Diese Konstruktion des Beleuchtungssystems 14,16 hilft Platz sparen, weil die Länge des Überblendprojektors in Richtung der optischen Achsen der Objektive 10,12 kürzer ist, als wenn die Lampen 18,20 sich in der optischen Achse der Objektive 10,12 befinden würden.

Die Umlenkspiegel 22,24 können für Infrarotlicht durchlässig sein und nur das sichtbare Licht spiegeln, so daß die in den Abbildungsstrahlengang der Objektive 10,12 einzuführenden Dias nicht unnötig erhitzt werden.

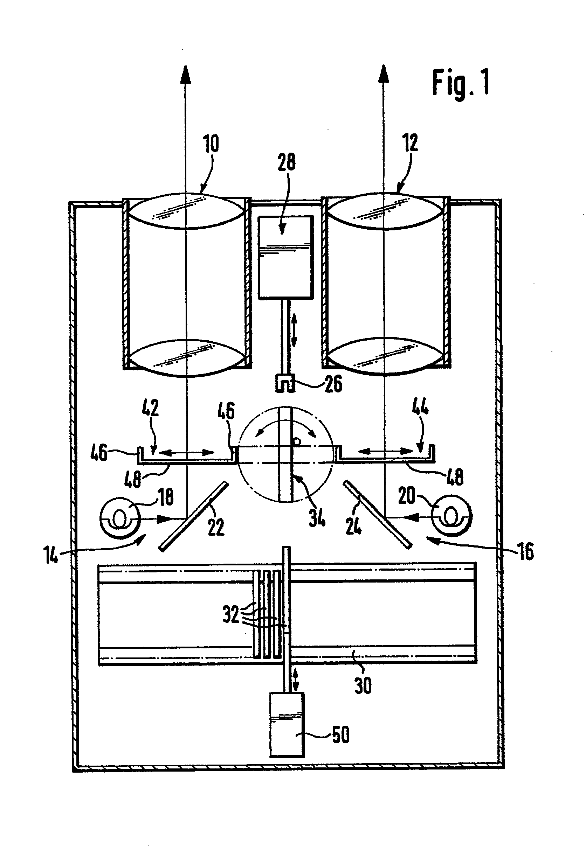

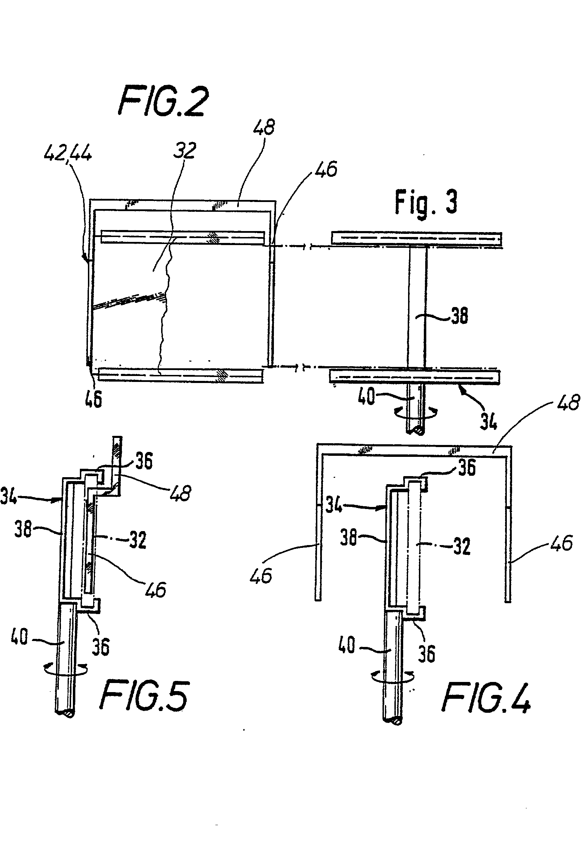

Zwischen den beiden Objektiven 10,12 des Überblendprojektors befindet sich ein Hauptschieber 26 in Form einer Zangeneinrichtung, die parallel zu den optischen Achsen der Objektive 10,12 verschiebbar ist, wobei die Zangen der Zangeneinrichtung 26 in der Horizontalebene verschwenkbar sind, wie dies in der Fig. 1 angedeutet ist. Die das Öffnen und Schließen der Zangen der Zangeneinrichtung 26 und die lineare Verschiebung der Zangeneinrichtung 26 besorgende Antriebseinheit ist nur schematisch dargestellt und mit dem Bezugszeichen 28 versehen, da es dem Belieben des Fachmanns überlassen bleibt, wie er sie ausbildet. Wie es aus Fig. 1 hervorgeht, verläuft ferner die Führung 30 für ein den beiden Bildwerfern 10,14 und 16,12 gemeinsames Diamagazin mit Dias 32 quer zu den optischen Achsen der Objektive 10,12. In der Verschiebungsstrecke des als Zangeneinrichtung ausgebildeten Hauptschiebers 26, der ja die Dias 32 aus dem Diamagazin holt und sie nach der Projektion dorthin wieder zurückgibt, liegt eine Diadreheinrichtung 34, die außer in Fig. 1 auch in den Fig. 3 und 4 näher dargestellt ist. Die Diadreheinrichtung 34 weist zwei auf Abstand befindliche horizontale U-förmige Profile 36 für die Aufnahme eines Dias 32 auf, wie dies aus den Fig. 3 und 4 hervorgeht, sowie einen die beiden U-Profile 36 miteinander verbindenden Träger 38, an dem eine vertikale Drehstange 40 befestigt ist zur Verschwenkung der U-förmigen Profile 36 um 90°, wie dies aus der Draufsicht der Fig. 1 hervorgeht. Befindet sich die Diadreheinrichtung in der mit ausgezogenen Linien in Fig. 1 dargestellten Stellung, in der die U-förmigen Profile 36 parallel zu den optischen Achsen der Objektive 10,12 verlaufen, dann kann - weil der Träger 38 von der durch die U-förmigen Profile 36 gebildeten (Dia-)Ebene weit genug beabstandet ist - die Zangeneinrichtung 26 durch die Diadreheinrichtung hindurchgreifen und ein Dia 32 aus dem Diamagazin holen und es in der Diadreheinrichtung 34 ablegen, wobei sich die Zangeneinrichtung nach dem Ablegen eines Dias in der Diadreheinrichtung weiter zurückzieht, um eine Verschwenkung der Diadreheinrichtung nicht zu stören. Die Diadreheinrichtung 34 verschwenkt dann das Dia, dessen Ebene noch parallel zu den optischen Achsen der Objektive 10,12 liegt, um 90°, so daß das Dia nunmehr quer zu den optischen Achsen der Objektive 10,12 liegt. Dies ist die gestrichelte Stellung in Fig. 1.

Um das Dia dann aus der Diadreheinrichtung in den Abbildungsstrahlengang der jeweiligen Objektive 10,12 bringen zu können, ist jedem Objektiv 10,12 bzw. jedem Bildwerfer noch ein Querschieber 42,44 zugeordnet. Dieser Querschieber 42,44 der auch in Fig. 2 näher dargestellt ist, weist im wesentlichen zwei starr miteinander verbundene vertikale Halteelemente 46 in einem solchen Abstand auf, daß ein Dia 32 dazwischen paßt, wobei die Halteelemente 46 durch einen Rahmen (sh. insbesondere Fig. 2) starr miteinander verbunden sind. Wie man aus einem Vergleich der Fig. 2 und 3 erkennt, sind dabei die Halteelemente 46 des Querschiebers 42 bzw. 44 kürzer als der Abstand der U-förmigen Profile 36, so daß der Querschieber 42 bzw. 44 zwischen die U-förmigen Profile 36, wenn sich die Diadreheinrichtung in der gestrichelten Stellung der Fig. 1 befindet, hindurchgeschoben werden kann. Da aber die Drehstange 40 mit dem Träger 34 auch seitlich von den U-förmigen Profilen 36 beabstandet ist (sh. Fig. 4 aber auch Fig. 1, wo die Lage der Drehachse angegeben ist) kann der Querschieber 46 auch dann an den Ort der Diadreheinrichtung 34 geschoben werden, wenn diese parallel zu den optischen Achsen der Objektive 10,12 ausgerichtet ist. Der Träger 38 befindet sich hierbei wie in Fig. 1 angedeutet außerhalb der Bahn des Querschiebers 42,44. Weiterhin ist zu bemerken, daß der die Halteelemente 46 zusammenhaltende Rahmen 48 vorteilhafterweise auf der dem Diamagazin zugewandten Seite liegt.

Der Querschieber 42 oder der Querschieber 44 befindet sich am Ort der Diadreheinrichtung 34, wenn diese parallel zu den optischen Achsen der Objektive 10,12 ausgerichtet ist. Ist mit Hilfe der Zangeneinrichtung 26 ein Dia in der Diadreheinrichtung 34 eingesetzt worden, so kann dann die Diadreheinrichtung 34 um 90° geschwenkt werden, wobei dann das Dia zwischen die Halteelemente 46 des Querschiebers 42 bzw. 44 eingeschwenkt wird. Durch Verschieben des Querschiebers 42 bzw. 44 in den jeweiligen Abbildungsstrahlengang des Objektivs 10 bzw. 12 wird dann das Dia eben in den Abbildungsstrahlengang gebracht, so daß es durch das jeweilige Objektiv 10 oder 12 abgebildet werden kann. Der Rücktransport des einzelnen Dias in das Diamagazin erfolgt in umgekehrter Richtung. Der Querschieber 42 oder 44 mit einem Dia wird aus dem Abbildungsstrahlengang des Objektivs 10 oder 12 zur Diadreheinrichtung 34 verschoben, die dabei senkrecht zu den optischen Achsen der Objektive 10 oder 12 ausgerichtet ist. Dann wird die Diadreheinrichtung um 90° geschwenkt, so daß sie parallel zu den optischen Achsen der Objektive 10,12 ausgerichtet ist. Hierauf wird die Zangeneinrichtung, also der Hauptschieber,26 in Betrieb genommen, der das Dia in der Diadreheinrichtung erfaßt, es aus der Diadreheinrichtung in Richtung auf das Diamagazin schiebt und es in einen freien Platz des Diamagazins einsetzt. Der Transport des Diamagazins erfolgt über eine Pilgerschrittschaltung.

Es ergibt sich folgender Betriebsablauf:

1. Der Hauptschieber holt ein Dia aus dem Diamagazin in die parallel zu den optischen Achsen der Objektive 10,12 ausgerichtete Diadreheinrichtung 34.

2. Die Diadreheinrichtung 34 dreht sich um 90°, so daß das Dia in den dort befindlichen Querschieber 42 eingesetzt wird.

3. Der Querschieber 42 bringt das Dia aus der Diadreheinrichtung 34 in den Abbildungsstrahlengang des Objektivs 10.

4. Der Querschieber 44 bringt das Dia aus dem Abbildungsstrahlengang 12 in die Diadreheinrichtung 34.

5. Die Diadreheinrichtung 34 dreht sich um 90°, so daß sie wieder parallel zu den optischen Achsen der Objektive 10,12 ausgerichtet ist.

6. Im Laufe eines der Schritte 2 bis 5 wurde das Diamagazin um einen Schritt zurückgefahren.

7. Der Hauptschieber 26 bringt das Dia aus der Diadreheinrichtung 34 in das Diamagazin zurück.

8. Das Diamagazin fährt zwei Schritte nach vorne.

9. Wie bei 1.

Da die Dias im Diamagazin eng beieinander liegen, so daß es schwierig ist, mit den Zangen der Zangeneinrichtung 26 zwischen die einzelnen im Diamagazin befindlichen Dias einzufahren, wird in vorteilhafterweise von einem Diaauswerfer 50 Gebrauch gemacht, der auf der dem Hauptschieber 26 entgegengesetzten Seite des Diamagazins wie in Fig. 1 gezeigt vorgesehen ist und von dieser aus ein Dia teilweise aus dem Diamagazin stößt, bevor dieses mit der Zangeneinrichtung 26 ergriffen wird.

In Fig. 5 ist eine Endansicht des die Diadreheinrichtung 34 überlappenden Querschiebers 42 dargestellt. In Fig. 2 sind mit den Bezugszeichen 50 im Projektionsweg der Linsen 10 bzw. 12 befindliche stationäre U-Profile bezeichnet, die das Dia 32 oben und unten halten.

## Patentansprüche

1. Überblendprojektor mit zwei zu einem Gerät vereinigten Bildwerfern, die je ein Objektiv (10,12), eine Diabühne und ein Beleuchtungssystem (14,16) aufweisen, einer Führung (30) für ein gemeinsames Diamagazin und einer Einrichtung zum Diawechsel, **dadurch gekennzeichnet,** daß die Führung (30) für das Diamagazin quer zu den optischen Achsen der zwei Bildwerfer verläuft, daß zwischen den beiden Bildwerfern ein parallel zu den optischen Achsen verschiebbarer Hauptschieber (26) zur Entnahme eines Dias (32) aus dem Diamagazin für eine Projektion und zur Eingabe eines Dias in das Diamagazin nach der Projektion angeordnet ist, daß in der Verschiebungsstrecke des Hauptschiebers (26) eine Diadreheinrichtung (34) mit einer vertikalen Drehachse vorgesehen ist zum Drehen der in die Diadreheinrichtung eingeführten Dias um 90° und daß jeder Diabühne ein Querschieber (42,44) zugeordnet ist zum Wechseln eines Dias (32) zwischen der jeweiligen Diabühne und der Diadreheinrichtung (34).

2. Überblendprojektor nach Anspruch 1, **dadurch gekennzeichnet,** daß der Hauptschieber (26) eine verschiebbare, ein Dia ergreifende Zangeneinrichtung ist.

3. Überblendprojektor nach Anspruch 1 oder 2, **dadurch gekennzeichnet,** daß auf der zur Diadreheinrichtung (34) entgegengesetzten Seite der Diamagazinführung (30) ein auf der zum Hauptschieber (26) entgegengesetzten Diaseitenkante angreifender Diaauswerfer (50) wirksam ist zum teilweisen Ausstoß eines Dias (32).

4. Überblendprojektor nach einem der Ansprüche 1 bis 3, **dadurch gekennzeichnet,** daß jeder Querschieber (42,44) zwei starr miteinander verbundene Halteelemente (46) aufweist, zwischen die das Dia (32) durch die Diadreheinrichtung (34) einschwenkbar ist.

5. Überblendprojektor nach einem der Ansprüche 1 bis 3, **dadurch gekennzeichnet,** daß die Diadreheinrichtung (34) zwei horizontale U-artige Profile (36) zur Aufnahme eines Dias (32) aufweist, die über einen schmalen Träger (38) außerhalb der Verschiebungsstrecke des Hauptschiebers miteinander verbunden sind.

## Claims

1. Dissolve projector having two image-projection systems which are combined to form one instrument and each have a lens (10, 12), a slide gate and an illumination system (14, 16), and having a guide track (30) for a joint slide magazine and a device for slide changing, characterized in that the guide track (30) for the slide magazine runs transversely to the optical axes of the two image-projection systems, in that a principal slider bar (26), which has the purpose of removing a slide (32) from the slide magazine for projection and introducing a slide into the slide magazine after projection and can be moved parallel to the optical axes, is arranged between the tow image-projection systems, in that a slide-rotation device (34) having a vertical axis of rotation is provided within the zone of movement of the principal slider bar (26) and has the purpose of rotating the slide introduced into the slide-rotation device through 90°, and in that each slide gate is assigned a transverse slider bar (42, 44) for transferring a slide (32) between the respective slide gate and the slide-rotation device (34).

2. Dissolve projector according to Claim 1, characterized in that the principal slider bar (26) is a movable claw device which grips a slide.

3. Dissolve projector according to Claim 1 or 2, characterized in that a slide ejector (50), which grips the side edge of the slide on the opposite side to the principal slider bar (26), has the action, on the side of the slide magazine guide track (30) opposite the slide-rotation device (34), of partially pushing out a slide (32).

4. Dissolve projector according to one of Claims 1 to 3, characterized in that each transverse slider bar (42, 44) has two retention elements (46), connected rigidly to one another, between which the slide (32) can be swivelled by the slide-rotation device (34).

5. Dissolve projector according to one of Claims 1 to 3, characterized in that the slide-rotation device (34) has two horizontal U-shaped profiles (36) which have the purpose of accepting a slide (32) and are connected to one another, via a narrow support (38), outside the zone of movement of the principal slider bar.

## Revendications

1. Projection de fondu enchaîné comportant deux projecteurs d'image qui sont réunis en un appareil et qui comprennent chacun un objectif (10, 12), un support de projection de diapositives et un système d'éclairage (14, 16), et comportant un guidage (30), pour un chargeur de diapositives commun, et un dispositif pour l'échange de diapositives, caractérisé
- en ce que le guidage (30) du chargeur de diapositives s'étend transversalement aux axes optiques des deux projecteurs d'image,
- en ce qu'est agencé entre les deux projecteurs d'image un tiroir principal (26), qui peut être déplacé parallèlement aux axes optiques, pour la prise d'une diapositive (32) dans le chargeur de diapositives en vue d'une projection et pour l'introduction d'un diapositive dans le chargeur de diapositives après la projection,
- en ce que sur le trajet de translation du tiroir principal (26) est prévu un dispositif de rotation de diapositives (34), présentant un axe de rotation vertical, pour la rotation de 90° de la dispositi-

ve mise en place dans le dispositif de rotation de diapositives, et

- en ce qu'à chaque support de projection de diapositive est associé un tiroir transversal (42, 44) pour l'échange d'une diapositive (32) entre le support de projection de diapositive respectif et le dispositif de rotation de diapositives (34).

2. Projecteur de fondu enchaîné suivant la revendication 1, caractérisé en ce que le tiroir principal (26) est constitué par un dispositif de pince qui peut être déplacé et qui saisit une diapositive.

3. Projecteur de fondu enchaîné suivant l'une ou l'autre des revendications 1 et 2, charactérisé en ce que du côté du guidage de chargeur de diapositives (30), opposé au dispositif de rotation de diapositives (34), agit un extracteur de diapositive (50) qui prend sur le bord latéral de diapositive, opposé au tiroir principal (26), pour l'éjection partielle d'une diapositive (32).

4. Projecteur de fondu enchaîné suivant l'une quelconque des revendications 1 à 3, charactérisé en ce que chaque tiroir transversal (42, 44) présente deux éléments de retenue (46) qui sont solidement reliés l'un à l'autre et entre lesquels peut être pivotée la diapositive (32) par le dispositif de rotation de diapositive (34).

5. Projecteur de fondu enchaîné suivant l'une quelconque des revendications 1 à 3, caractérisé en ce que le dispositif de rotation de diapositives (34) présente pour la réception d'un diapositive (32) deux profilés horizontaux en forme de U (36) qui sont reliés l'un à l'autre en dehors du trajet de translation du tiroir principal par un support mince (38).

Fig. 1

FIG.2

Fig. 3

FIG.5

FIG.4